# EUROPEAN PATENT APPLICATION

(11) **EP 2 541 495 A1**
(43) Date of publication of application: **02.01.2013**
(21) Application number: 12162462.1
(22) Date of filing: 30.03.2012
(51) Int. Cl.: G06T 5/00, G06T 15/20

(54) **Depth Image-Based Rendering**

(30) Priority: 28.06.2011 KR 20110062771
(71) Applicant: Samsung Electronics Co., Ltd., Suwon-si, Gyeonggi-do, 443-742 (KR)
(72) Inventor: Choi, Jae-hyeok, Seoul (KR); Ahn, Won-seok, Gyeonggi-do (KR)
(74) Representative: Robinson, Ian Michael

(57) **Abstract**

Provided are an apparatus and method for processing an image. The image processing apparatus that generates a three-dimensional (3D) video signal corresponding to a two-dimensional (2D) video signal includes: an image receiver which receives a frame of a 2D video signal containing a background and an object; and an image processor which determines a hole area caused by a shift of the object based on depth information of the object, and inpaints the hole area according to layer information of the background and th e object. Accordingly, there ar e provided an apparatus and method for processing an image, in which a hole area is naturally and easily inpainted.

## Description

### CROSS-REFERENCE TO RELATED APPLICATION

This application claims priority from Korean Patent Application No. 10-2011-0062771, filed on June 28, 2011 in the Korean Intellectual Property Office.

### BACKGROUND

### Field

Apparatuses and methods consistent with exemplary embodiments relate to an apparatus and a method for processing an image, and more particularly, to an apparatus and a method for processing an image, in which a two-dimensional (2D) video signal is converted into a three-dimensional (3D) video signal.

### Description of the Related Art

Restoration of a damaged, discolored or erased part of an image in processing a video signal is called inpainting. Inpainting has been widely used in special effects for films or animation production, and also widely used in generating a 3D image with growth of 3D contents.

In particular, when a 3D image is generated on the basis of a 2D image source, a hole area is caused as an object is shifted. Further, selection of image data to be used to inpaint the hole area is the key to generation of the 3D video signal.

### SUMMARY

According to th e present invention there is provided an apparatus and method as set forth in the appended claims. Other features of the invention will be apparent from the dependent claims, and the description which follows. One or more exemplary embodiments provide an apparatus and a method for processing an image, which can naturally and easily inpaint a hole area.

One or more other exemplary embodiments provide an apparatus and a method for processing an image, which can compensate for loss and expansion of an object when rendering.

According to an aspect of an exemplary embodiment, there is provided an image processing apparatus that generates a three-dimensional (3D) video signal corresponding to a two-dimensional (2D) video signal, the apparatus including: an image receiver which receives a frame of the 2D video signal including a background and an object; and an image processor which determines a hole area caused by a shift of the object based on depth information of the object, and inpaints the hole area according to layer information of the background and the object.

T h e la y e r information ma y include information about a layer order of the overlapped background and at least one object, corresponding to respective pixels, and the image processor may inpaint the hole area with pixel data of the background or an object corresponding to a layer located just below the layer of the object that is shifted to cause the hole area.

The image processor may inpaint the hole area with pixel data of the background or an object horizontally adjacent to a boundary of the hole area.

The image processor may divide the frame of the 2D video signal and the depth information into the background and at least one object, process the hole area caused in the 2D video signal and depth information by division of the background and the at least one object in accordance with the layer information, and generate the 3D video signal by individually rendering the background and the at least one object based on the depth information corresponding to the background and the at least one object.

The image processor may filter a boundary part of the individually rendered background and the individually rendered object.

According to an aspect of another exemplary embodiment, there is provided an image processing apparatus that generates a 3D video signal corresponding to a 2D video signal, the apparatus including: an image receiver which receives a frame of a 2D video signal including a background and an object; and an image processor which determines a hole area caused by a shift of the object based on depth information of the object, and inpaints the hole area according to pixel data of the background or an object adjacent to a boundary of the hole area.

According to an aspect of another exemplary embodiment, there is provided an image processing method that generates a 3D video signal corresponding to a 2D video signal, the method including: receiving a frame of a 2D video signal including a background and an object; determining a hole area caused by a shift of the object based on depth information of the object; and inpainting the hole area according to layer information of the background and the object.

T h e la y e r information ma y include information about a layer order of the overlapped background and at least one object, and the inpainting the hole area may include inpainting the hole area with pixel data of the background or an object corresponding to a layer located just below the layer of the object is shifted to cause the hole area.

The method may further include: dividing the frame of the 2D video signal and the depth information into the background and at least one object before determining the hole area; and generating the 3D video signal by individually rendering the background and the at least one object based on the depth information corresponding to the background and the at least one object after inpainting the hole area, wherein the inpainting the hole area includes processing the hole area caused in the frame of the 2D video signal and depth information by division of the background and the at least one object in accordance with the layer information.

The rendering may include filtering a boundary part of the individually rendered background and the individually rendered object.

According to an aspect of another exemplary embodiment, there is provided an image processing method that generates a 3D video signal corresponding to a 2D video signal, the method including: receiving a frame of a 2D video signal including a background and an object; determining a hole area caused by a shift of the object based on depth information of the object; and inpainting the hole area according to pixel data of the background or an object adjacent to a boundary of the hole area.

According to an aspect of another exemplary embodiment, there is provided an image processing method that generates a 3D image corresponding to a 2D image, the method including: receiving a 2D image including a background and an object; determining a hole area caused by a shift of the object based on depth information of the object; and inpainting the hole area according to at least one of layer information of the background and the object, and pixel data of the background or an object adjacent to a boundary of the hole area.

According to an aspect of another exemplary embodiment, there is provided a computer readable recording medium storing a program for implementing the foregoing methods respectively.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a control block diagram of an image processing apparatus according to an exemplary embodiment;

FIG. 2 is a view for explaining a hole area due to a shift of an object in an image processing apparatus according to an exemplary embodiment;

FIGs. 3A to 3D are views for explaining layer information to be used for inpainting the hole area in an image processing apparatus according to an exemplary embodiment;

FIG. 4 is a control flowchart for explaining an image processing method according to an exemplary embodiment;

FIG. 5 is a view fo r explaining an inpainting of a hole area according to another exemplary embodiment;

FIG. 6 is a control flowchart for explaining an image processing method according to another exemplary embodiment;

FIG. 7 is a view for explaining a method of inpainting a hole area during rendering in an image processing apparatus according to an exemplary embodiment; and

FIG. 8 is a view for explaining a rendering and filtering of an image processing apparatus according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout. It is understood that, hereinafter, expressions such as "at least one of," when preceding a list of elements, modify the entire list of elements and do not modify the individual elements of the list.

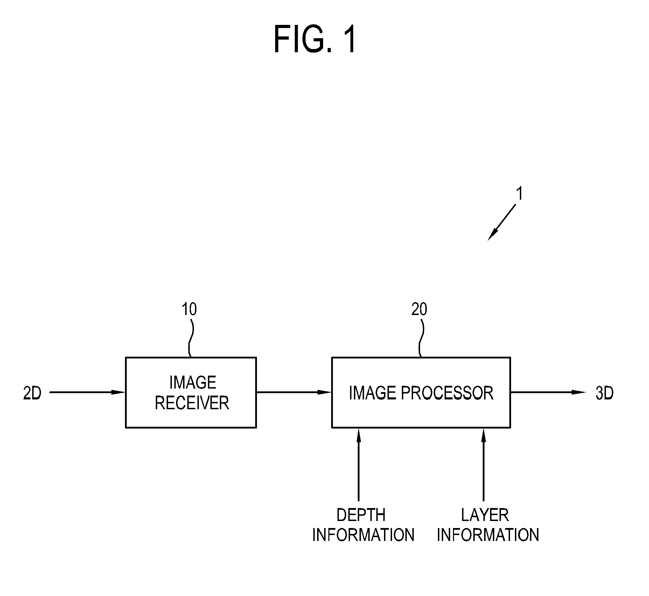

FIG. 1 is a control block diagram of an image processing apparatus 1 according to an exemplary embodiment.

As shown therein, an image processing apparatus 1 according to the present exemplary embodiment includes an image receiver 10 and an image processor 20. The image processing apparatus 1 may be realized by an apparatus capable of generating a three-dimensional (3D) video signal corresponding to a two-dimensional (2D) video signal, and may also be realized by a computer-readable recording medium storing a program to implement an image processing method to be described below. Further, such an image processing apparatus 1 may be achieved by an apparatus of a service firm that receives a 2D video signal, converts the 2D signal into a 3D video signal, and provides the 3D video signal to a user, or may be achieved by a part of the whole apparatus for providing the corresponding service.

The image receiver 10 receives a 2D video signal containing a background and at least one object. The image receiver 10 may include various connectors and interfaces for wiredly or wirelessly receiving a video signal. Specifically, the image receiver 10 may include a broadcast receiver capable of receiving a sky wave such as a broadcasting signal and a satellite signal, and may include an interface for receiving a video signal on the basis of the Internet and a like web service.

The video signal may contain a broadcasting signal, a 2D moving picture such as a film, an animation, an advertisement image, etc. A frame image of a video signal includes a background and at least one object, though it is understood that the frame image may include only the background, and may include one or more objects.

The image processor 20 determines a hole area caused by a shift of an object on the basis of depth information about the object, and inpaints the hole area based on layer information of a background and an object. In the present exemplary embodiment, the image processor 20 generates a 3D video signal based on a 2D video signal and depth information, e.g., a depth map indicating a depth of an object. The depth information for a 2D image is obtained by mapping how deep an object is located, i.e., a depth value for each pixel. The depth information is used as information for calculating parallax disparity of an object when a 3D video signal is generated based on a 2D video signal, and corresponds to key information used for generating the 3D video signal. The depth information may be received from the exterior or may be received together with a 2D video signal through the image receiver 10.

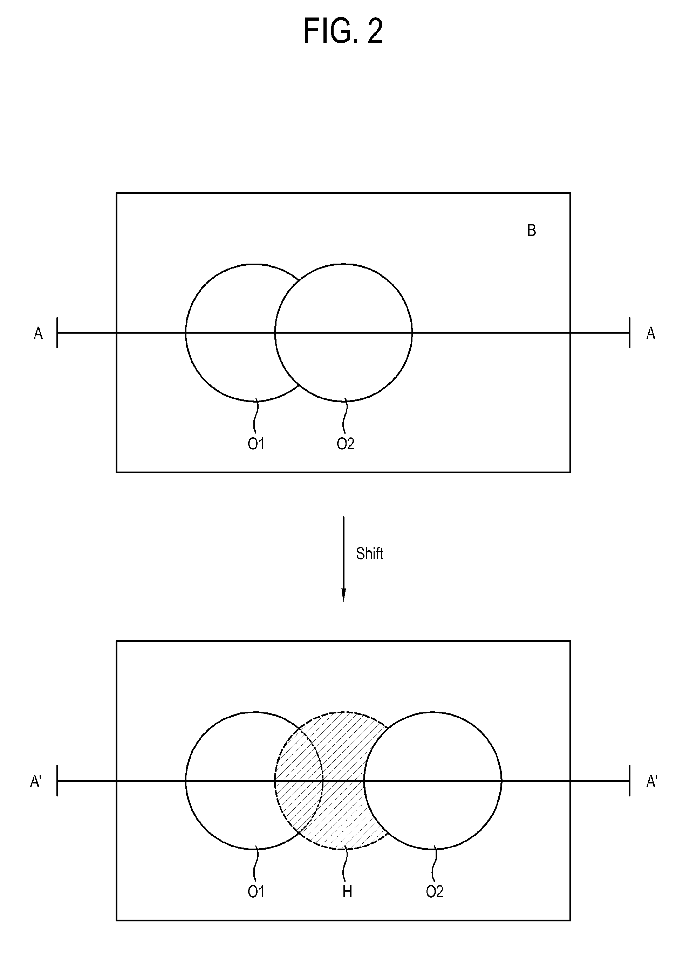

FIG. 2 is a view for explaining a hole area H due to a shift of an object in an image processing apparatus according to an exemplary embodiment. As shown in FIG. 2, a 2D video signal contains two objects O1 and O2 on a background B. A process of rendering a 2D video signal into a 3D video signal includes a process of shifting the object and the background as much as a parallax disparity. The image processor 20 parallax-shifts the object on the basis of depth information. In this shifting process, a hole area H is caused by the shift of the object. The hole area H is inpainted on the basis of an original 2D video signal since the hole area H is not present in the received 2D video signal. For the convenience of description, it will be regarded that the hole area H is caused by the shift of only the second object O2, from among the first object O1, the second object O2, and the background B.

FIGs . 3A to 3D are views for explaining layer information to be used for inpainting the hole area in the image processing apparatus 1 according to an exemplary embodiment. As shown in FIG. 1, the image processor 2 receives depth information and layer information of a 2D image. The layer information may be received through the image receiver 10, or may be received from the exterior through another interface or transmission. Further, the image processor 2 0 may generate layer information. Methods for generating the layer information from the 2D video signal may include various algorithms, and the image processor 20 may execute such various algorithms.

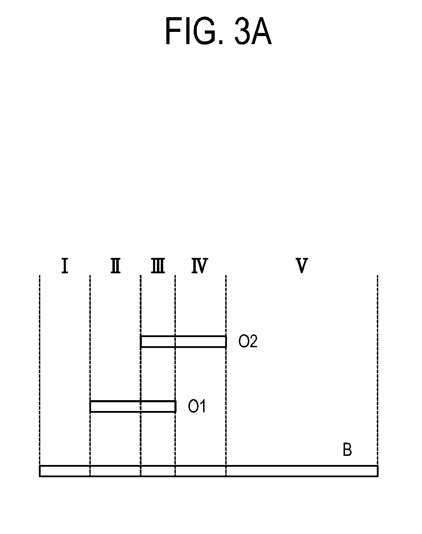

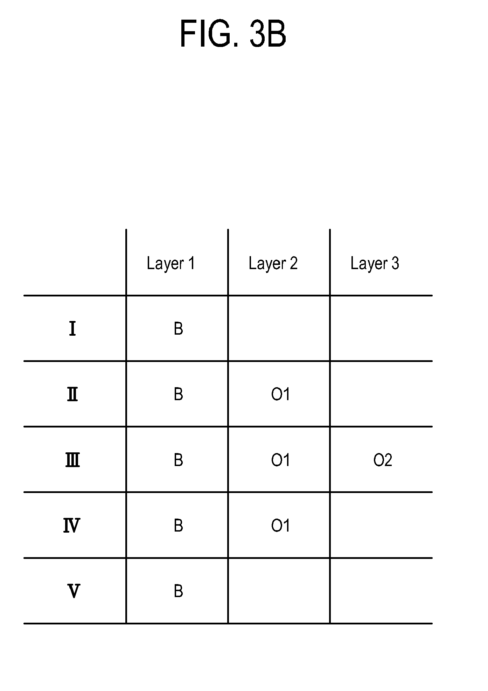

FIG. 3A shows layer information according to an exemplary embodiment. The layer information is information about an order of layers of the overlapped background and at least one object, corresponding to respective pixels, and FIGs . 3A and 3B show the layer information of the 2D image of FIG. 2. FIG. 3A shows the layer information about a first cross-section taken along line A-A (FIG. 2) containing the first object O1 and the second object O2 in the 2D image. The first object O1 is present on the background B, and the second object O2 partially overlaps with and is present on the first object O1. Since no object is present in a first area I and a fifth area V, th e layer information about pixels corresponding to the first area I and the fifth area V is a first layer (layer 1) containing only the background B. Since the first object O1 is located above the background B, the layer information about pixels corresponding to a second area II is the background B corresponding to the first layer (layer 1) and a second layer (layer 2) about the first object O1 located above the first layer (layer 1). A third area III includes the background as the first layer (layer 1), the first object O1 as the second layer (layer 2), and a second object O2 as the topmost third layer (layer 3). A fourth area IV includes the second object O2 as the second layer (layer 2) . Through the layer information, the image processor 20 determines what layer includes what object, and in what order the object and/or background are layered in.

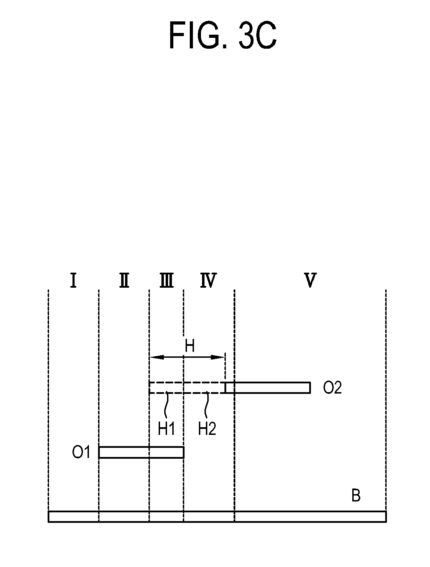

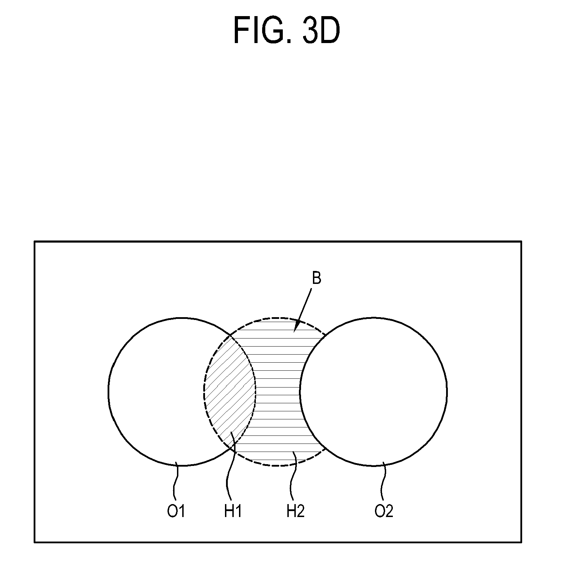

FIG. 3C shows the layer information when the hole area is caused as the object is shifted, and specifically shows the layer information about a second cross-section taken along line A'-A' in FIG. 2. As shown therein, if the second object O2 is shifted, the hole area H is made in a part of the third area III and the fourth area IV. The image processor 20 inpaints the hole area H on the basis of pixel data of the background or object located just below the object that had been present on the hole area H. That is, as shown in FIG. 3D, a first hole area H1 of the hole area H is inpainted by the first object O1, and the other area, i.e., a second hole area H2 is inpainted by the background B. In the case of the first hole area H1 made in the third area III, the object that had been present on the first hole area H1 is the second object O2, and the layer just below the second object O2, i.e., the second layer (layer 2), is the first object O1. The image processor 20 inpaints the first hole area H1 on the basis of the pixel data of the first object O1 located just below the second object O2. In the case of the second hole area H2, the layer just below the object O2 is the background B, and thus the image processor 20 inpaints the second hole area H2 on the basis of the pixel data corresponding to the background B.

In the case where the layers are not simple but complicated, if there is no standard for using image data of a corresponding area when inpainting the hole area, the inpainting is unnatural. For example, if an object such as the second object O2 causing the hole area is used or an object of an upper layer is used for inpainting the first hole area H1, a 3D image may have an error or be unnatural since continuity of the image is broken. Therefore, the image processor 20 in the present exemplary embodiment uses the background or object corresponding to the layer located just below the object causing the hole area in order to inpaint the hole area.

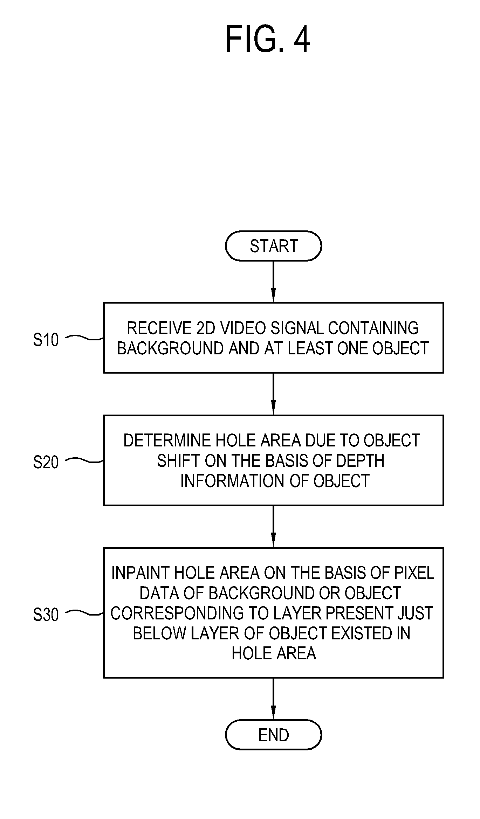

FIG. 4 is a control flowchart for explaining an image processing method according to an exemplary embodiment. The inpainting method of the image processor 20, shown in FIGs. 3A to 3D, will be described with reference to FIG. 4.

First, at operation S10, a frame of a 2D video signal containing a background and at least one object is received.

At operation S20, the image processor 20 determines the hole area caused by the shift of the object on the basis of the depth information of the object. The depth information may refer to a depth map indicating a depth value of each pixel corresponding to the 2D video signal. The depth information is used for calculating the disparity that indicates how much the object is shifted, so that the hole area can be determined.

Then, at operation S30, the image processor 20 inpaints the hole area based on the layer information of the background and the object, in which the pixel data of the background or the object corresponding to the layer located just below the layer of the object that had been present in the hole area is used for inpainting the hole area. The layer information may be information about a layer order of the overlapped background and at least one object, corresponding to respective pixels of the 2D video signal. The layer information may be directly generated by the image processor 20 or may be input from an exterior to the image processor 20.

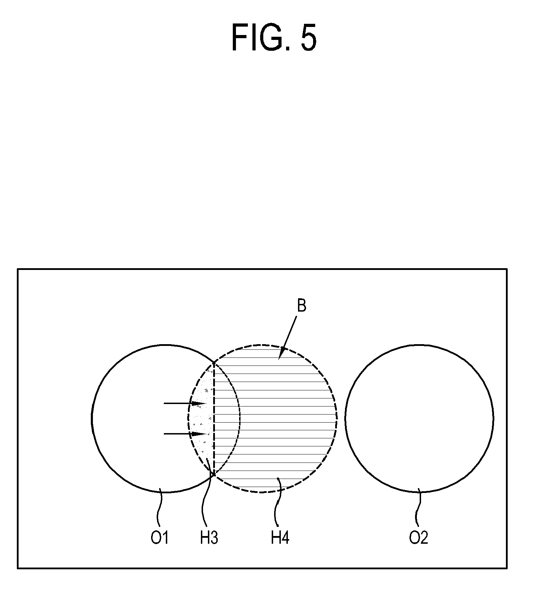

FIG. 5 is a view fo r explaining an inpainting of a hole area according to another exemplary embodiment. In the present exemplary embodiment, the image processor 20 determines the hole area caused by the shift of the object on the basis of the depth information of the object, and inpaints the hole area with the pixel data of the background or the object adjacent to the boundary of the hole area.

If the image processor 20 receives no layer information or generates no layer information, the image processor 20 uses the pixel data of a region adjacent to the boundary of the hole area, e.g., the background or the object horizontally adjacent to the boundary of the hole area. In the case of generating the 3D video signal based on the 2D image, the object may be shifted left and right, i.e., in a horizontal direction, so that the pixel data of a horizontally adjacent area can be used for the inpainting.

As shown in FIG. 5, a third hole area H3 adjacent to the first object O1 in the hole area is inpainted using the pixel data of the first object O1, and a fourth hole area H4 horizontally adjacent to the background B is inpainted using the pixel data of the background B. The boundaries of the third hole area H3 and the fourth hole area H4 may be naturally set up during the inpainting, and the boundary of the object used in inpainting the hole area may be referred to. If the layered objects as shown in FIG. 3A - 3D are not usable in the inpainting because of lack of layer information, the image processor 20 in the present exemplary embodiment inpaints the hole area with the pixel data horizontally adjacent to the hole area on the basis of the horizontal shift of the object.

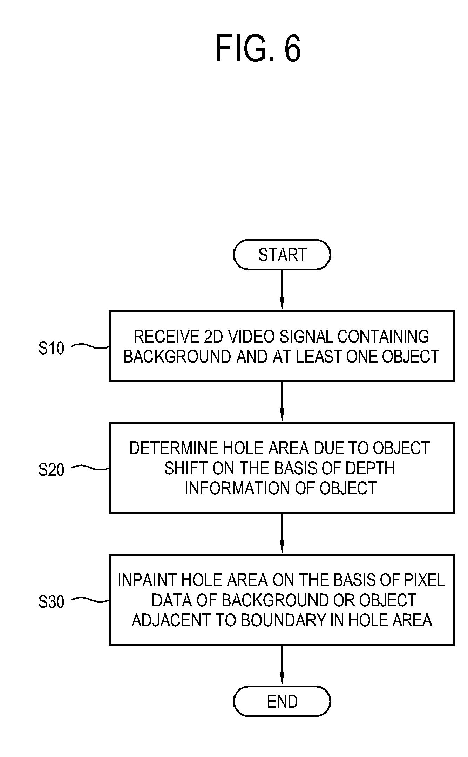

FIG. 6 is a control flowchart for explaining an image processing method according to another exemplary embodiment. Below, the inpainting method of the image processor 20 will be described with reference to FIG. 6. As shown therein, operation S10 for receiving a frame of a 2D video signal containing the background and at least one object, and operation S20 for determining the hole area caused by the shift of the object on the basis of the depth information of the object are similar to those of FIG. 4.

At operation S40, the image processor 20 in the present exemplary embodiment determines the hole area, and inpaints the hole area with the pixel data of the background or object adjacent to the boundary of the hole area.

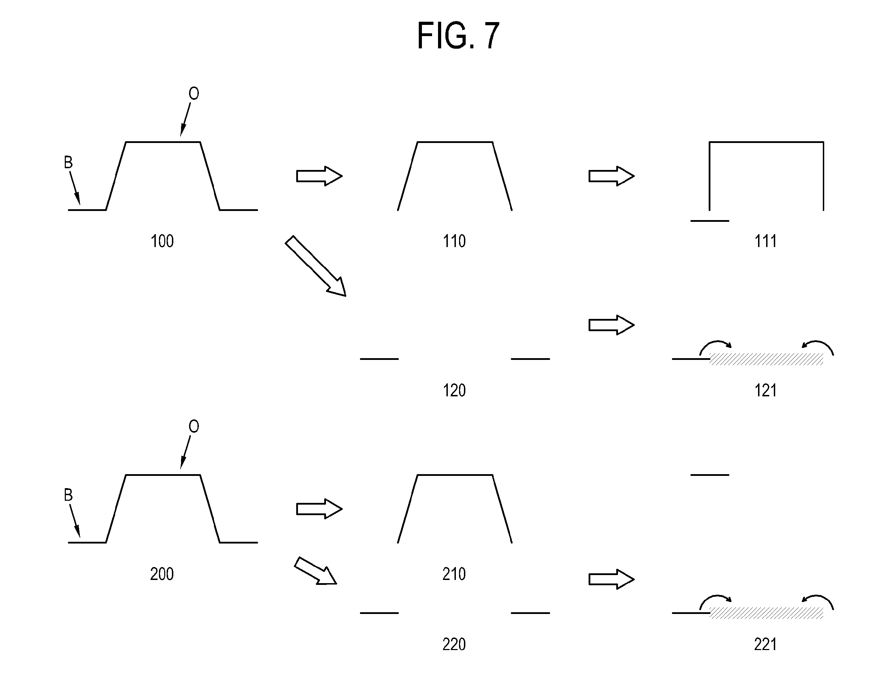

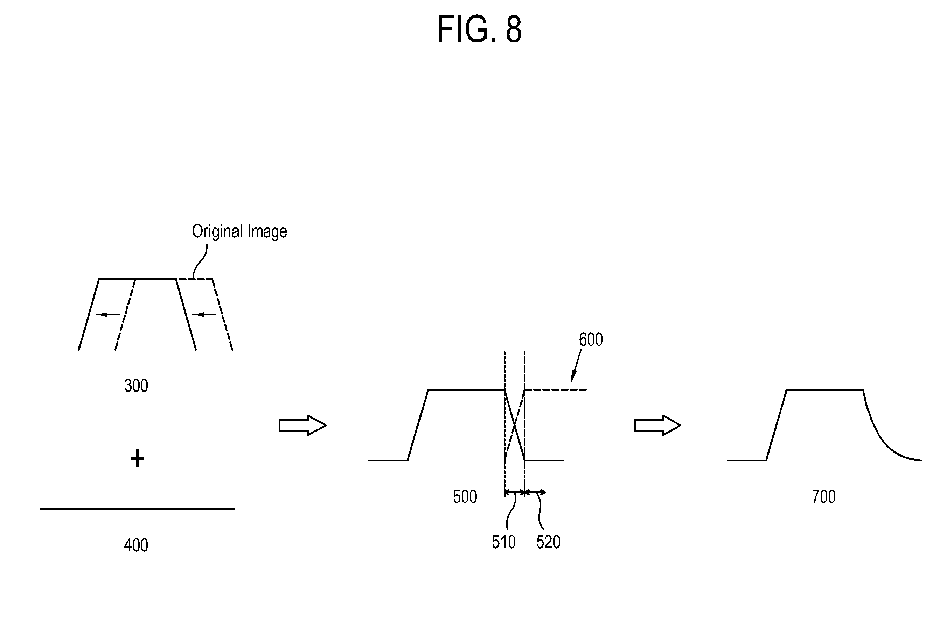

FIG. 7 is a view for explaining a method of inpainting a hole area during rendering in an image processing apparatus according to an exemplary embodiment, and FIG. 8 is a view for explaining the rendering and filtering of the image processing apparatus of FIG. 7.

The image processor 20 determines the hole area, inpaints the hole area, and then performs rendering to generate left- and right-eye images based on the 2D video signal according to the depth information. The image processor 20 in the present exemplary embodiment renders the background and the object individually during the rendering operation, and generates the left- and right-eye images by combining the separately rendered background and object.

FIG. 7 shows a depth map 100 corresponding to the depth information, and pixel data 200 of a 2D video signal containing a background B and one object 0. The 2D video signal 200 is rendered depending on the depth map 100 and generated as the left- and right-eye images. For convenience, the right-eye image of which the object is shifted leftward will be described.

First, the image processor 20 divides the depth map 100 and the frame of the 2D video signal 200 into the background and the object. As shown therein, the depth map 100 is divided into a depth value 110 corresponding to the object and a depth value 120 corresponding to the background, and the frame of the 2D video signal is also divided into an object pixel value 210 and a background pixel value 220.

The image processor 20 changes a depth value of a background area corresponding to a boundary of the object to have the same value as a depth value of the object so that the object can have a natural boundary without loss or expansion when rendered. The depth value 111 corresponding to the adjusted object is used for rendering the divided object pixel value 210.

According to the foregoing inpainting method, the image processor 20 inpaints absent areas 121, 221 of the depth value 120 corresponding to the background and the background pixel value 220. That is, the image processor 20 inpaints the hole area of the background on the basis of the layer information of the 2D video signal, or compensates for the pixel data and the depth value corresponding to the background on the basis of a value horizontally adjacent to the hole area.

The image processor 20 generates a rendered image 300 corresponding to the object by rendering the depth value 111 corresponding to the adjusted object and the object pixel value 210, and generates a rendered image 400 corresponding to the background by rendering the inpainted background depth value 121 and the inpainted background pixel value 221.

Then, the image processor 20 combines the rendered images 300 and 400 rendered individually. In the composite image 500, a boundary part 510 of the object, where the object meets the background, is acquired by rendering the objet before inpainting the background, and a near background 520 adjacent to the object within the background corresponds to an area acquired by inpainting the hole area caused by the shift of the object. The boundary part 510 of the object is natural when the pixel values of the object and the background are properly mixed. In the case of the composite image 500 according to the present exemplary embodiment, the boundary part 510 of the object may be unnatural since the pixel data of the inpainted hole area, i.e., the inpainted background is not mixed. To improve this point, the image processor 20 may filter the boundary part 510 of the object. The filtering is applied to the boundary part 510 of the object by gradually increasing the pixel data of the background against the object. If the pixel data of the boundary part 510 of the object is compensated using a graph 600 showing a ratio of the background to the object, a final rendering image 700 is generated. In conclusion, the image processor 20 in the present exemplary embodiment divides the 2D video signal 100 and the depth map (i.e., depth information) 200 into values 110, 120, 210 and 220 with respect to the background and the object, and inpaints the hole areas caused by the division with the layer information or the horizontal data. Then, the background and the object are individually rendered to generate the left- and right-eye video signals of the 3D image. The individually rendered images 300 and 400 are composed, and the boundary part 510 of the object in the composite image 500 is filtered in accordance with the graph 600 showing a ratio of the background to the object.

As described above, according to one or more exemplary embodiments, there are provided an apparatus and a method for processing an image, which can naturally and easily inpaint a hole area.

Furthermore, according to one or more exemplary embodiments, there are provided an apparatus and a method for processing an image, which can compensate for loss and expansion of an object when rendering.

One or more exemplary embodiments may be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, one or more components of the image processing apparatus 1 can include a processor or microprocessor executing a computer program stored in a computer-readable medium.

Although a few preferred embodiments have been shown and described, it will be appreciated by those skilled in the art that various changes and modifications might be made without departing from the scope of the invention, as defined in the appended claims.

## Claims

1. An image processing apparatus that generates a three-dimensional (3D) video signal corresponding to a two-dimensional (2D) video signal, the apparatus comprising:
an image receiver which receives a frame of the 2D video signal, the frame comprising a background and an object; and
an image processor which determines a hole area caused by a shift of the object based on depth information of the object, and inpaints the hole area according to layer information of the background and the object.

2. The apparatus according to claim 1, wherein:
the layer information comprises information about a layer order of the background and at least one object, corresponding to respective pixels; and
the image processor inpaints the hole area with pixel data of the background or an object corresponding to a layer located just below a layer of the object that is shifted to cause the hole area.

3. The apparatus according to claim 1, wherein the image processor inpaints the hole area with pixel data of the background or an object horizontally adjacent to a boundary of the hole area.

4. The apparatus according to claim 1, wherein the image processor divides the received frame of the 2D video signal and the depth information into the background and at least one object, processes the hole area of the 2D video signal and the depth information to be inpainted and generates the 3D video signal by individually rendering the background and the at least one object according to the depth information corresponding to the background and the at least one object.

5. The apparatus according to claim 4, wherein the image processor filters a boundary part of the individually rendered background and the individually rendered at least one object.

6. The apparatus according to claim 5, wherein the image processor filters the boundary part by gradually increasing pixel data of the background against the at least one object.

7. The apparatus according to claim 1, wherein the image processor determines a hole area caused by a shift of the object based on depth information of the object, and inpaints the hole area according to pixel data of the background or an object adjacent to a boundary of the hole area.

8. The apparatus according to claim 7, wherein the image processor inpaints the hole area according to layer information of the background and the object when the layer information is available, and inpaints the hole area with the pixel data of the background or the object horizontally adjacent to the boundary of the hole area when the layer information is not available.

9. An image processing method that generates a 3D video signal corresponding to a 2D video signal, the method comprising:
receiving a frame of the 2D video signal comprising a background and an object;
determining a hole area caused by a shift of the object based on depth information of the object; and
inpainting th e hole ar e a according to layer information of the background and the object.

10. The method according to claim 9, wherein:
the layer information comprises information about a layer order of the overlapped background and at least one object; and
the inpainting the hole area comprises inpainting the hole area with pixel data of the background or an object corresponding to a layer located just below a layer of the object that is shifted to cause the hole area.

11. The method according to claim 9, further comprising:
dividing the received frame of the 2D video signal and the depth information into the background and at least one object before determining the hole area; and
generating the 3D video signal by individually rendering the background and the at least one object according to the depth information corresponding to the background and the at least one object after inpainting the hole area,
wherein the inpainting the hole area comprises processing the hole area caused in the received frame of the 2D video signal and the depth information in accordance with the layer information.

12. The method according to claim 11, wherein the rendering comprises filtering a boundary part of the individually rendered background and the individually rendered object.

13. The method according to claim 9, the method further comprising:
determining a hole area caused by a shift of the object based on depth information of the object; and
inpainting the hole area according to pixel data of the background or an object adjacent to a boundary of the hole area.
